# EUROPEAN PATENT SPECIFICATION

(11) **EP 2 801 430 B1**
(45) Date of publication and mention of the grant of the patent: **13.04.2016**
(21) Application number: 14167599.1
(22) Date of filing: 08.05.2014
(51) Int. Cl.: B23D 59/00, B27B 5/065, B23D 47/04

(54) **Machine for cutting wood panels or the like**
Maschine zum Aufteilen von Holzplatten oder dergleichen
Machine à découper des panneaux de bois ou analogue

(30) Priority: 08.05.2013 IT BO20130208
(43) Date of publication of application: 12.11.2014
(73) Proprietor: BIESSE S.p.A., Pesaro (IT)
(72) Inventor: Lattanzi, Lorenzo, 61100 PESARO (IT)
(74) Representative: Manconi, Stefano

(56) References cited:
- EP-A1- 2 574 433
- DE-A1-102008 058 162
- DE-A1-102009 018 498
- DE-A1-102009 031 940
- JP-A- H03 128 203
- US-A- 4 736 511
- US-A- 4 771 667

## Description

The present invention relates to a machine for cutting wood panels or the like as per the preamble of claim 1. Such a machine is known from EP 2 574 433 A1.

It is known in the field of processing wood panels to provide a cutting machine comprising a support structure defining a substantially horizontal support table for at least one wood panel or the like; a cutting station; at least one feeding device for feeding the panels along the support table and through the cutting station in a first direction; and a cutting device, which is mounted in the cutting station so as to move in a second direction and along a cutting plane which are perpendicular to the first direction, and to cut the panels.

The cutting machine also comprises a pressing device comprising two crosspieces, which extend in the second direction, are arranged on opposite sides of the cutting plane in the first direction, and are mobile so as to move perpendicular to the support table, between a clamping position, in which the panels are clamped against the support table, and a release position.

The cutting machine also has a suction device to suck shavings and/or swarf generated by the cutting device.

Generally, the suction device comprises at least one suction mouth, which is mounted between the two crosspieces of the pressing device, and is mobile in the second direction with the same law of motion as the cutting device.

The cutting machine also comprises a limit stop device parallel to the first direction, and an aligner device mounted between the crosspieces of the pressing device to move in the second direction and correctly position the panels in contact with the limit stop device.

Known machines for cutting wood panels or the like of the type described above have certain drawbacks mainly due to the fact that the two crosspieces of the pressing device are to be mounted at a relatively large distance from one another due to the presence of the suction mouth in the pressing device.

Known machines for cutting wood panels or the like of the type described above also have the further drawback consisting of the fact that the simultaneous presence of the suction mouth and of the aligner device in the pressing device greatly limits the strokes of the suction mouth and of the aligner device in the second direction.

It is an object of the present invention to provide a machine for cutting wood panels or the like, which is exempt from the above-described drawbacks and is simple and affordable to implement.

According to the present invention, there is provided a machine for cutting wood panels or the like, as claimed in the appended claims.

The present invention will now be described with reference to the accompanying drawings, which illustrate a non-limiting embodiment thereof, in which:
figure 1 is a diagrammatic plan view, with parts removed for clarity, of a preferred embodiment of the cutting machine of the present invention;
figure 2 is a diagrammatic perspective view, with parts removed for clarity, of a detail of the cutting machine in figure 1;
figure 3 is a diagrammatic side view, with parts removed for clarity, of the detail in figure 2;
figure 4 is a perspective diagrammatic view of a detail in figures 2 and 3; and
figure 5 is a diagrammatic side view, with parts removed for clarity, of a variant of the detail in figures 2 and 3.

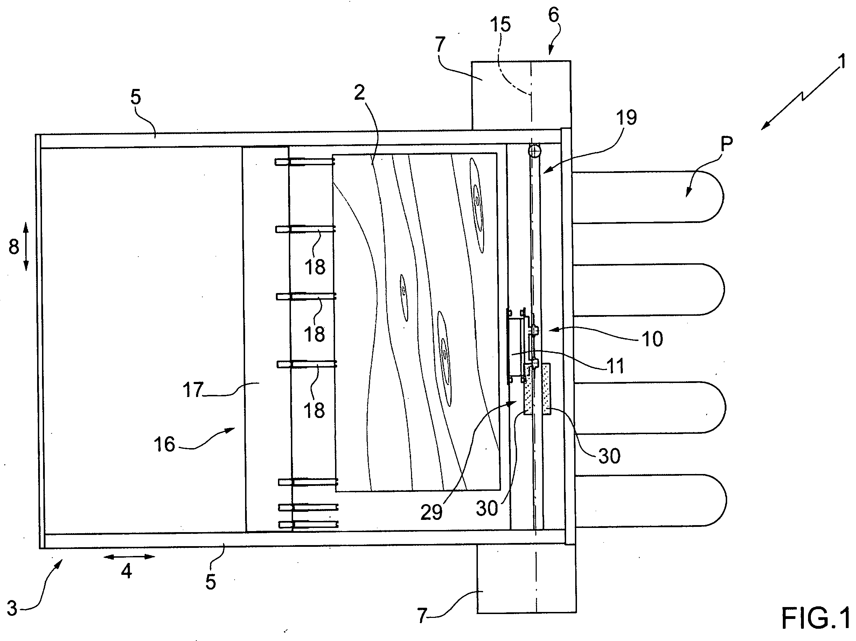

With reference to figure 1, numeral 1 indicates, as a whole, a machine for cutting wood panels 2 or the like, which are substantially rectangular in shape.

Machine 1 has a support structure 3 which is elongated in shape and extends in a substantially horizontal direction 4, defines a support table P for at least one panel 2, and comprises a pair of longitudinal guide members 5 which are parallel to one another and to direction 4 itself.

Machine 1 also comprises a cutting station 6 obtained at a pair of vertical uprights 7, which are arranged on opposite sides of the longitudinal members 5 in a horizontal direction 8 which is transverse to direction 4, and extend in a direction 9 orthogonal to directions 4 and 8.

As shown in figures 1, 2 and 3, station 6 is equipped with a cutting device 10 comprising a motorized carriage 11 coupled in a sliding manner to structure 3 to perform, with respect to structure 3 and under the thrust of a known drive device not illustrated, straight movements in direction 8.

Carriage 11 supports a blade 12 and an engraver 13 which are mounted to rotate about respective longitudinal axes 14 which are parallel with one another and to direction 4 and to perform straight movements in direction 9 between relative lowered resting positions, in which blade 12 and engraver 13 are arranged below table P to allow the feeding of the panels 2 along table P, and relative raised operating positions, in which blade 12 and engraver 13 project above table P to cut the panels 2.

Blade 12 and engraver 13 are also moved by carriage 11 along a cutting plane 15 parallel to direction 8, with a straight alternating motion comprising an advancing stroke, in which engraver 13, which is arranged in front of blade 12 in the advancing direction 8 of carriage 11, engraves panel 2 arranged on table P and blade 12 cuts the panels 2, and a return stroke.

With reference to figure 1, machine 1 also comprises a pick and transport unit 16 for feeding the panels 2 along table P and through station 6 in both directions of direction 4.

Unit 16 comprises a motorized support crosspiece 17, which extends between the two longitudinal members 5 in direction 8, and is coupled in a sliding manner to the two longitudinal members 5 to carry out, with respect to the longitudinal members 5 and under the thrust of a known drive device not illustrated, straight movements in direction 4.

Crosspiece 17 supports a plurality of picking members 18, which are distributed along crosspiece 17 in direction 8, are selectively mobile with respect to crosspiece 17 between a raised resting position and a lowered operating position, and each comprises two respective jaws which are mobile with respect to one another between a clamping position and a release position of at least one panel 2.

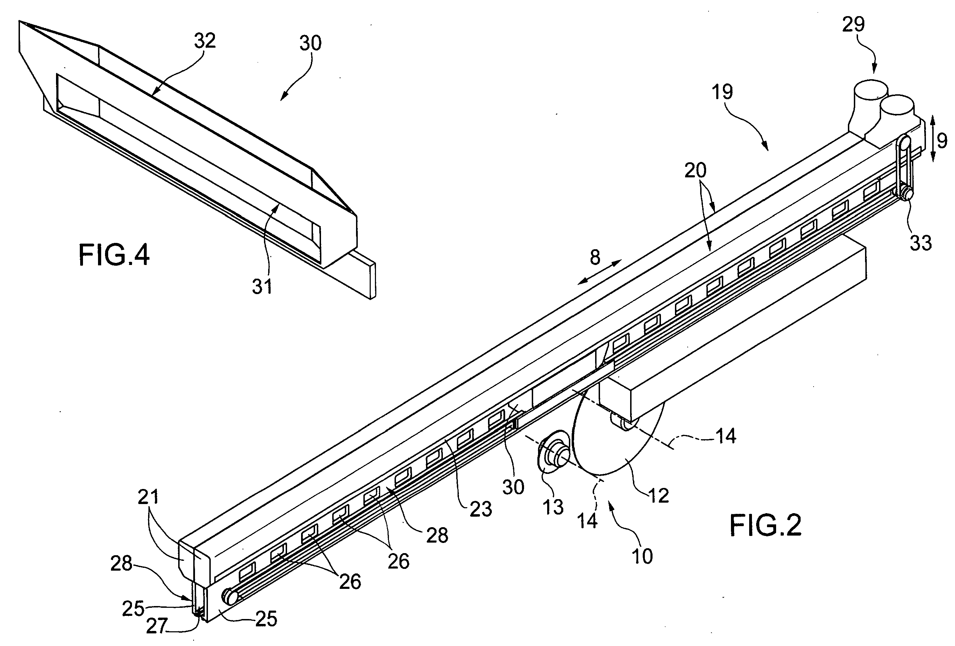

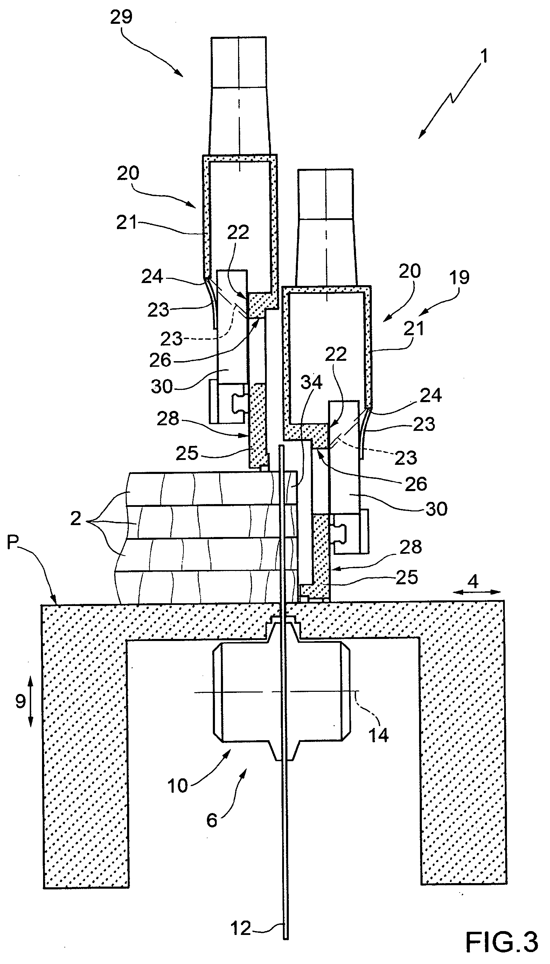

As shown in figures 2 and 3, device 10 cooperates with a pressing device 19, which is mounted above table P, extends between the two uprights 7 in direction 8 and comprises two crosspieces 20, which are mobile with respect to table P with respective laws of motion that are independent from one another in direction 9.

Each crosspiece 20 comprises an upper quadrilateral section bar 21, which extends in direction 8, and has a slit 22, which is obtained through, and along, the section bar 21 in direction 8, and is substantially closed by an elastically deformable elongated gasket 23 fixed to the section bar 21 at an upper edge 24 thereof.

Each crosspiece 20 also comprises a substantially flat plate 25, which protrudes downwards from the section bar 21, extends substantially orthogonal to direction 4, and has a plurality of openings 26 aligned with each other in direction 8.

The two plates 25 are arranged on opposite sides of cutting plane 15 in direction 4, and are limited laterally in direction 4 by respective inner faces 27 facing each other, and by respective external faces 28 opposite to the related faces 27.

The openings 26 obtained through the two plates 25 define part of a suction device 29 also comprising two suction manifolds defined by the section bars 21, a pneumatic suction device known and not illustrated, connected with the section bars 21, and two suction mouths 30, each associated with a respective crosspiece 20.

With reference to figure 4, each mouth 30 is shaped as a box-type body, and comprises an inlet section 31 facing the related openings 26, and an outlet section 32, which protrudes into the related slit 22, and extends between the related gasket 23 and the related plate 25.

Each mouth 30 is coupled in a sliding manner to the outer face 28 of the related plate 25 to perform, with respect to the related crosspiece 20 and under the thrust of a related drive device 33, straight movements in direction 8 with a law of motion that is independent from the law of motion of carriage 11.

In use, the two crosspieces 20 are moved in direction 9 from a raised resting position to a lowered operating position, in which the two plates 25 block the panels 2 against table P or in which, in the case shown in figure 3 and relative to the cutting of a front or rear trim 34 of each panel 2, the two plates 25 are moved one in contact with the panels 2 and the other in contact with table P.

Once the pressing device 19 is moved into its lowered operating position, the cutting device 10 and the two suction mouths 30 are moved in direction 8 to allow device 10 to cut the panels 2 and the mouths 30 to suck shavings and/or swarf generated by device 10.

To this end, it is suitable to point out that:
shavings and/or swarf are sucked by the suction device 29, in succession and in the order, between the two crosspieces 20, through the openings 26, along the mouths 30 from the related inlet sections 31 to the related outlet sections 32, and finally along the suction manifolds defined by the section bars 21; and
each opening 26 is partly closed by a protective mesh (not illustrated) adapted to prevent the suction into the mouths 30 of cumbersome swarf, which may compromise the correct operation of device 29 both in terms of suction capacity of the mouths 30, and in terms of movement capacity of the mouths 30.

According to certain variants not illustrated:
the two crosspieces 20 are eliminated and replaced with a single crosspiece comprising a single upper section bar entirely similar to the section bar 21, and two plates entirely similar to the plates 25; and
the openings 26 are obtained through an upper closure wall, which extends between the crosspieces 20, and is engaged in a sliding manner by the inlet section 31 of the mouths 30.

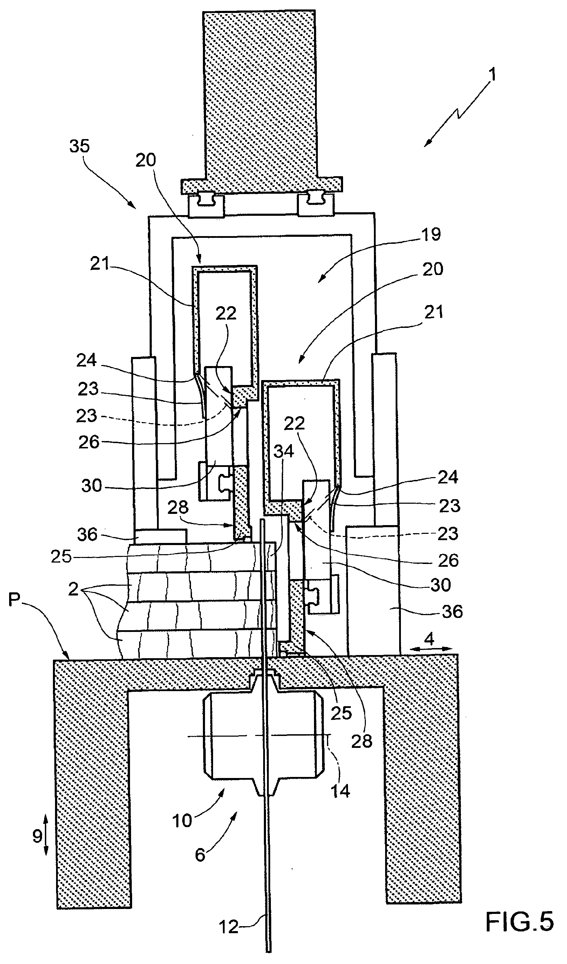

The variant shown in figure 5 differs from that shown in figures 1 to 4 only for the fact that the cutting station 6 is also equipped with an aligner device 35 for correctly positioning the panels 2 in direction 8 against a limit stop device known and not illustrated.

Device 35 comprises two aligner members 36, which are mounted on opposite sides of the crosspieces 20 in direction 4, and are mobile in direction 8, with respective laws of motion that are independent from the laws of motion of the mouths 30.

To this end, it is suitable to point out that the mouths 30 and the members 36 are mobile in direction 8 along respective feeding paths which are parallel to one another and distinct from one another and, therefore, along all the crosspieces 20.

## Claims

1. A machine for cutting wood panels (2) or the like, the machine comprising a support structure (3) defining a support table (P) for the panels (2); a cutting station (6), which is provided with a cutting device (10) mounted so as to move in a first direction (8) and in a cutting plane (15) that is orthogonal to the support table (P), and is provided, furthermore, with a pressing device (19), which is mounted so as to move between a clamping position, in which the panels (2) are clamped against the support table (P), and a release position; and a suction device (29) to suck shavings and/or swarf generated by the cutting device (10), the sucking device (29) comprising at least one sucking mouth (30), which is mobile in the first direction (8); and being **characterised in that** the pressing device (19) has at least one opening (26) for the passage of shavings and/or swarf; the suction mouth (30) being mounted outside of the pressing device (19) in a position that faces said opening (26), so as to suck shavings and/or swarf into the pressing device (19) and through the opening (26) itself.

2. A machine according to claim 1, wherein the pressing device (19) comprises two crosspieces (20), which are arranged on opposite sides of the cutting plane (15) in a second direction (4) that is transverse to the first direction (8), and an upper closing plate, which extends between the crosspieces (20) themselves; said opening (26) being obtained through said upper closing plate.

3. A machine according to claim 1, wherein the pressing device (19) comprises two crosspieces (20), which are arranged on opposite sides of the cutting plane (15) in a second direction (4) that is transverse to the first direction (8); said opening (26) being obtained through one of said crosspieces (20).

4. A machine according to any of the previous claims, wherein the sucking device (29) comprises a suction manifold (21), which is obtained in the pressing device (19) parallel to the first direction (8) and has a suction slit (22), which is obtained through the pressing device (19) parallel to the first direction (8) itself.

5. A machine according to claim 4, wherein the sucking mouth (30) comprises an inlet section (31), which faces said opening (26), and an outlet section (32), which is engaged in said suction slit (22) to feed shavings and/or swarf, in succession and in the order, into the pressing device (19), through said opening (26), along the suction mouth (30), and along the suction manifold (21).

6. A machine according to claim 4 or 5, wherein the suction device (29) comprises, furthermore, at least one elastically deformable gasket (23), which extends along the pressing device (19) in the first direction (8), so as to close the suction slit (22), and is engaged in a sliding manner by the suction mouth (30).

7. A machine according to any of the previous claims, wherein the suction mouth (30) comprises an inlet section (31), which faces said opening (26), and an outlet section (32), which is connected to a pneumatic suction system.

8. A machine according to any of the previous claims, wherein the suction mouth (30) is coupled to the pressing device (19) in a sliding manner, so as to perform straight movements along the pressing device (19) itself in the first direction (8).

9. A machine according to any of the previous claims, wherein the pressing device (19) has at least a plurality of said openings (26).

10. A machine according to any of the previous claims and comprising, furthermore, a limit stop device, which is parallel to a second direction (4) that is transverse to the first direction (8), and an aligner device (35), which is mobile in the first direction (8) so as to correctly position the panels (2) against the limit stop device.

11. A machine according to claim 10, wherein the suction mouth (30) and the aligner device (35) are mobile in the first direction (8) along respective paths, which are parallel to one another and distinct from one another.

12. A machine according to claim 10 or 11, wherein the aligner device (35) is mounted on the cutting device (10).

13. A machine according to any of the previous claims, wherein the suction device (29) comprises two suction mouths (30), which are arranged on opposite sides of the pressing device (19) in a second direction (4) that is transverse to the first direction (8) and each face at least a respective opening (26).

14. A machine according to any of the previous claims, wherein the pressing device (19) comprises two crosspieces (20), which are arranged on opposite sides of the cutting plane (15) in a second direction (4) that is transverse to the first direction (8), are mobile in a third direction (9) that is substantially orthogonal to said first and second direction (8, 4) with the same law of motion, and are each connected to a respective suction mouth (30).

15. A machine according to any of the claims from 1 to 13, wherein the pressing device (19) comprises two crosspieces (20), which are arranged on opposite sides of the cutting plane (15) in a second direction (4) that is transverse to the first direction (8), are mobile in a third direction (9) that is substantially orthogonal to said first and second direction (8, 4) with respective laws of motion that are independent form one another, and are each connected to a respective suction mouth (30).

16. A machine according to any of the previous claims and comprising, furthermore, a feeding device (16) to feed the panels (2) through the cutting station (6) in a second direction (4) that is transverse to the first direction (8).

## Patentansprüche

1. Eine Maschine zum Schneiden von Holzplatten (2) oder ähnlichem, wobei die Maschine eine Tragstruktur (3) umfasst, die einen Tragtisch (P) für die Platten (2) bildet; ferner eine Schneidstation (6), welche mit einer Schneideinrichtung (10) versehen ist, die montiert ist, um sich in eine erste Richtung (8) und in einer Schneidebene (15), die senkrecht zu dem Tragtisch (P) steht, zu bewegen, und die ferner mit einer Presseinrichtung (19) versehen ist, die montiert ist, um sich zwischen einer Klemmposition, in welcher die Platte (2) gegen den Tragtisch (P) geklemmt sind, und einer Freigabeposition zu bewegen; und eine Saugeinrichtung (29), um Späne und/oder Staub, die/der durch die Schneideinrichtung (10) erzeugt wird, aufzusaugen, die Saugeinrichtung (29) umfasst wenigstens einen Saugmund (30), der mobil in der ersten Richtung (8) ist; **dadurch gekennzeichnet, dass** die Presseinrichtung (19) wenigstens eine Öffnung (26) für den Durchtritt der Späne und/oder des Staubs aufweist; der Saugmund (30) außerhalb der Presseinrichtung (19) in einer Position montiert ist, welche der genannten Öffnung (26) gegenübersteht, sodass er die Späne und/oder den Staub in die Presseinrichtung (19) und durch die Öffnung (26) selbst saugt.

2. Eine Maschine gemäß Anspruch 1, wobei die Presseinrichtung (19) zwei Kreuzstücke (20) umfasst, die auf entgegengesetzten Seiten der Schneidebene (15) in einer zweiten Richtung (4) angeordnet sind, die quer zu der ersten Richtung (8) verläuft, und eine obere Schließplatte, die sich zwischen den Kreuzstücken (20) erstreckt; wobei sich die genannte Öffnung (26) durch die genannte obere Schließplatte erstreckt.

3. Eine Maschine gemäß Anspruch 1, wobei die Presseinrichtung (19) zwei Kreuzstücke (20) umfasst, die auf entgegengesetzten Seiten der Schneidebene (15) in einer zweiten Richtung (4), die quer zu der ersten Richtung (8) verläuft, angeordnet sind, wobei sich die genannte Öffnung (26) durch eines der Kreuzstücke (20) erstreckt.

4. Eine Maschine gemäß einem der vorhergehenden Ansprüche, wobei die Saugeinrichtung (29) einen Saugverteiler (21) umfasst, der in der Presseinrichtung (19) parallel zu der ersten Richtung (8) vorgesehen ist und einen Saugschlitz (22) umfasst, der sich durch die Presseinrichtung (19) parallel zu der ersten Richtung (8) erstreckt.

5. Eine Maschine gemäß Anspruch 4, wobei der Saugmund (30) einen Einlassabschnitt (31) umfasst, welcher der genannten Öffnung (26) gegenübersteht, und einen Auslassabschnitt (32), welcher im Eingriff mit dem genannten Saugschlitz (22) steht, um die Späne und/oder den Staub zu führen, hintereinander und in der Reihenfolge, in die Presseinrichtung (19), durch die genannte Öffnung (26), entlang des Saugmundes (30) und entlang des Saugverteilers (21).

6. Eine Maschine gemäß Anspruch 4 oder 5, wobei die Saugeinrichtung (29) ferner wenigstens eine elastisch verformbare Dichtung (23) umfasst, die sich entlang der Presseinrichtung (19) in der ersten Richtung (8) erstreckt, sodass sie den Saugschlitz (22) verschließt, und die gleitend mit dem Saugmund (30) im Eingriff steht.

7. Eine Maschine gemäß einem der vorhergehenden Ansprüche, wobei der Saugmund (30) einen Einlassabschnitt (31) umfasst, welcher der genannten Öffnung (26) gegenübersteht, und einen Auslassabschnitt (32), der an einem pneumatischen Saugsystem angeschlossen ist.

8. Eine Maschine gemäß einem der vorhergehenden Ansprüche, wobei der Saugmund (30) an die Presseinrichtung (19) gleitend angeschlossen ist, sodass er gerade Bewegungen entlang der Presseinrichtung (19) in der ersten Richtung (8) ausführt.

9. Eine Maschine gemäß einem der vorhergehenden Ansprüche, wobei die Presseinrichtung (19) wenigstens eine Vielzahl der genannten Öffnungen (26) umfasst.

10. Eine Maschine gemäß einem der vorhergehenden Ansprüche und ferner umfassend eine begrenzende Stoppeinrichtung, die parallel zu einer zweiten Richtung (4) ist, die quer zu der ersten Richtung (8) verläuft, und eine Ausrichteinrichtung (35), welche beweglich in der ersten Richtung (8) ist, derart, dass sie die Platte (2) korrekt gegen die begrenzende Stoppeinrichtung positioniert.

11. Eine Maschine gemäß Anspruch 10, wobei der Saugmund (30) und die Ausrichteinrichtung (35) beweglich in der ersten Richtung (8) entlang jeweiligen Wegen sind, welche parallel zueinander und verschieden voneinander sind.

12. Eine Maschine gemäß Anspruch 10 oder 11, wobei die Ausrichteinrichtung (35) auf der Schneideinrichtung (10) montiert ist.

13. Eine Maschine gemäß einem der vorhergehenden Ansprüche, wobei die Saugeinrichtung (29) zwei Saugmünder (30) umfasst, welche auf entgegengesetzten Seiten der Presseinrichtung (19) in einer zweiten Richtung (4), die quer zu der ersten Richtung (8) verläuft, angeordnet sind, und von denen jeder wenigstens einer entsprechenden Öffnung (26) gegenübersteht.

14. Eine Maschine gemäß einem der vorhergehenden Ansprüche, wobei die Presseinrichtung (19) zwei Kreuzstücke (20) umfasst, welche auf entgegengesetzten Seiten der Schneidebene (15) in einer zweiten Richtung (4), die quer zu der ersten Richtung (8) verläuft, angeordnet sind, die in einer dritten Richtung (9) beweglich sind, die im Wesentlichen senkrecht zu den genannten ersten und zweiten Richtungen (8, 4) verläuft, mit dem selben Bewegungsgesetz, und welche jeweils an einem entsprechenden Saugmund (30) angeschlossen sind.

15. Eine Maschine gemäß einem der Ansprüche 1 bis 13, wobei die Presseinrichtung (19) zwei Kreuzstücke (20) umfasst, welche auf entgegengesetzten Seiten der Schneidebene (15) in einer zweiten Richtung (4), die quer zu der ersten Richtung (8) verläuft, angeordnet sind, die in einer dritten Richtung (9) beweglich sind, die im Wesentlichen senkrecht zu den genannten ersten und zweiten Richtungen (8, 4) verläuft, mit entsprechenden Bewegungsgesetzen, die unabhängig voneinander sind, und welche jeweils an einem entsprechenden Saugmund (30) angeschlossen sind.

16. Eine Maschine gemäß einem der vorhergehenden Ansprüche und ferner umfassend eine Zufuhreinrichtung (16), um die Platte (2) durch die Schneidstation (6) in einer zweiten Richtung (4),die quer zu der ersten Richtung (8) verläuft, zu führen.

## Revendications

1. Machine à découper des panneaux de bois (2) ou analogues, la machine comprenant une structure de support (3) définissant une table de support (P) pour les panneaux (2) ; une station de découpe (6), qui est pourvue d'un dispositif de découpe (10) monté de manière à se déplacer dans une première direction (8) et dans un plan de découpe (15) qui est orthogonal à la table de support (P), et est, en outre, pourvue d'un dispositif de pressage (19), qui est monté de manière à se déplacer entre une position de serrage, dans laquelle les panneaux (2) sont serrés contre la table de support (P), et une position de libération ; et un dispositif d'aspiration (29) pour aspirer des chutes et/ou copeaux générés par le dispositif de découpe (10), le dispositif d'aspiration (29) comprenant au moins une embouchure d'aspiration (30), qui est mobile dans la première direction (8) ; et étant **caractérisée en ce que** le dispositif de pressage (19) comporte au moins une ouverture (26) pour le passage de chutes et/ou copeaux ; l'embouchure d'aspiration (30) étant montée à l'extérieur du dispositif de pressage (19) dans une position qui fait face à ladite ouverture (26), de manière à aspirer les chutes et/ou copeaux dans le dispositif de pressage (19) et à travers l'ouverture (26) elle-même.

2. Machine selon la revendication 1, dans laquelle le dispositif de pressage (19) comprend deux traverses (20), qui sont agencées sur des côtés opposés du plan de découpe (15) dans une deuxième direction (4) qui est transversale à la première direction (8), et une plaque de fermeture supérieure, qui s'étend entre les traverses (20) elles-mêmes ; ladite ouverture (26) étant obtenue à travers ladite plaque de fermeture supérieure.

3. Machine selon la revendication 1, dans laquelle le dispositif de pressage (19) comprend deux traverses (20), qui sont agencées sur des côtés opposés du plan de découpe (15) dans une deuxième direction (4) qui est transversale à la première direction (8) ; ladite ouverture (26) étant obtenue à travers une desdites traverses (20).

4. Machine selon l'une quelconque des revendications précédentes, dans laquelle le dispositif d'aspiration (29) comprend une tubulure d'aspiration (21), qui est obtenue dans le dispositif de pressage (19) parallèle à la première direction (8) et comporte une fente d'aspiration (22), qui est obtenue à travers le dispositif de pressage (19) parallèle à la première direction (8) elle-même.

5. Machine selon la revendication 4, dans laquelle l'embouchure d'aspiration (30) comprend une section d'entrée (31), qui fait face à ladite ouverture (26), et une section de sortie (32), qui est engagée dans ladite fente d'aspiration (22), pour acheminer des chutes et/ou copeaux, en succession et dans l'ordre, dans le dispositif de pressage (19), à travers ladite ouverture (26), le long de l'embouchure d'aspiration (30), et le long de la tubulure d'aspiration (21).

6. Machine selon la revendication 4 ou 5, dans laquelle le dispositif d'aspiration (29) comprend, en outre, au moins un joint (23) élastiquement déformable, qui s'étend le long du dispositif de pressage (19) dans la première direction (8), de manière à fermer la fente d'aspiration (22), et est engagé d'une manière coulissante par l'embouchure d'aspiration (30).

7. Machine selon l'une quelconque des revendications précédentes, dans laquelle l'embouchure d'aspiration (30) comprend une section d'entrée (31), qui fait face à ladite ouverture (26), et une section de sortie (32) qui est connectée à un système d'aspiration pneumatique.

8. Machine selon l'une quelconque des revendications précédentes, dans laquelle l'embouchure d'aspiration (30) est couplée au dispositif de pressage (19) d'une manière coulissante, de manière à effectuer des déplacements droits le long du dispositif de pressage (19) lui-même dans la première direction (8).

9. Machine selon l'une quelconque des revendications précédentes, dans laquelle le dispositif de pressage (19) comporte au moins une pluralité desdites ouvertures (26).

10. Machine selon l'une quelconque des revendications précédentes et comprenant, en outre, un dispositif de butée de limite, qui est parallèle à une deuxième direction (4) qui est transversale à la première direction (8), et un dispositif d'alignement (35), qui est mobile dans la première direction (8) de manière à positionner correctement les panneaux (2) contre le dispositif de butée de limite.

11. Machine selon la revendication 10, dans laquelle l'embouchure d'aspiration (30) et le dispositif d'alignement (35) sont mobiles dans la première direction (8) le long de chemins respectifs, qui sont parallèles les uns aux autres et distincts les uns des autres.

12. Machine selon la revendication 10 ou 11, dans laquelle le dispositif d'alignement (35) est monté sur le dispositif de découpe (10).

13. Machine selon l'une quelconque des revendications précédentes, dans laquelle le dispositif d'aspiration (29) comprend deux embouchures d'aspiration (30), qui sont agencées sur des côtés opposés du dispositif de pressage (19) dans une deuxième direction (4) qui est transversale à la première direction (8) et font chacune face à au moins une ouverture (26) respective.

14. Machine selon l'une quelconque des revendications précédentes, dans laquelle le dispositif de pressage (19) comprend deux traverses (20), qui sont agencées sur des côtés opposés du plan de découpe (15) dans une deuxième direction (4) qui est transversale à la première direction (8), sont mobiles dans une troisième direction (9) qui est sensiblement orthogonale auxdites première et deuxième directions (8, 4) selon la même loi de mouvement, et sont chacune connectées à une embouchure d'aspiration (30) respective.

15. Machine selon l'une quelconque des revendications 1 à 13, dans laquelle le dispositif de pressage (19) comprend deux traverses (20), qui sont agencées sur des côtés opposés du plan de découpe (15) dans une deuxième direction (4) qui est transversale à la première direction (8), sont mobiles dans une troisième direction (9) qui est sensiblement orthogonale auxdites première et deuxième directions (8, 4) selon des lois de mouvement respectives qui sont indépendantes les unes des autres, et sont chacune connectées à une embouchure d'aspiration (30) respective.

16. Machine selon l'une quelconque des revendications précédentes et comprenant, en outre, un dispositif d'acheminement (16) pour acheminer les panneaux (2) à travers la station de découpe (6) dans une deuxième direction (4) qui est transversale à la première direction (8).
